(19) **Europäisches Patentamt**

**European Patent Office**

**Office européen des brevets**

(11) Publication number: **0 251 516**
**B1**

(12) # EUROPEAN PATENT SPECIFICATION

(45) Date of publication of the patent specification:
**11.04.90**

(51) Int. Cl.⁴: **F16B 43/00**

(21) Application number: **87305013.2**

(22) Date of filing: **05.06.87**

(54) Seal assembly for a fastener.

(30) Priority: **27.06.86 US 879755**

(43) Date of publication of application:
**07.01.88 Bulletin 88/1**

(45) Publication of the grant of the patent:
**11.04.90 Bulletin 90/15**

(84) Designated Contracting States:
**DE FR GB IT**

(56) References cited:
**FR-A- 2 407 403**
**GB-A- 739 490**
**US-A- 3 726 178**
**US-A- 4 280 390**

(73) Proprietor: **PARKER HANNIFIN CORPORATION,**
**17325 Euclid Avenue, Cleveland Ohio 44112(US)**

(72) Inventor: **Jelinek, Jerry G., 741 Wegdewood Lane, La Habra California 90631(US)**

(74) Representative: **Purvis, William Michael Cameron et al, D. Young & Co. 10 Staple Inn, London WC1V 7RD(GB)**

## Description

The invention relates to a seal assembly for a fastener.

Sealing fasteners against leakage can pose a serious challenge where excessively large clearance holes are involved, typically where there is greater than 0.8mm (1/32") diametral clearance. An oil drain plug is one example of this situation while a pressurized structural assembly is another. It is necessary to ensure in these instances that the sealing member accommodates the tolerance range of both the opening to be sealed and the fastener involved in order to avoid a leak path.

This problem is accentuated if it is necessary to keep the fastener in tight engagement, that is, where there is no torque loss over a period of time. This requirement rules out the use of a plain rubber or composition flat washer which relaxes and takes a set over a period of time.

Still other problems inherent in devices of this kind are requirements that the sealing device be preassembled with the fastener to facilitate handling and to avoid the risk of inadvertent omission, and from the functional standpoint, the requirement that the sealing device retain its resilience over its intended service life.

Patent specification US-A 3 726 178 discloses a sealing washer which can be used for threaded and cylindrical shanks and comprises an outer rigid washer and an inner concentric elastomeric element having a thin outer portion, a thicker intermediate portion ad a sharp inner edge which can seal against a threaded shank, the portion connecting the sharp inner edge to the thicker intermediate portion having concave faces.

According to the invention there is provided a self-centering seal assembly for a fastener, comprising an annular retainer having generally parallel upper and lower surfaces and a central opening therein, and an annular elastomeric seal means disposed in the central opening of the retainer and secured thereto, the seal means being of tear drop shape in cross section and comprising a projecting seal portion adjacent inner and outer set back seal portions and an inner circular tip portion, ther projecting seal portion extending axially outwardly of the retainer beyond the upper and lower surfaces thereof, the inner and outer set back seal portions being set back axially from the upper and lower surfaces of the retainer, the tip portion extending radially inwardly of the inner set back seal portion and terminating in a smoothly rounded edge of convex curvature, the diameter of the tip portion at the edge being less than the diameter of a shank of the fastener with which the seal assembly is to be used, thereby to provide an interference fit thereon for support of the entire seal assembly, the radius of curvature of the edge being less than one-half the dimension between the upper and lower surfaces of the retainer and the inner set back seal portion comprising a pair of conical surfaces which taper linearly inwardly converging into the tip portion to position the projecting seal portion relative to the shank of the fastener and outside a range of tolerance of an opening in which the fastener is to be disposed.

Such a seal assembly can be self centering and may be preassembled and retained on the fastener to facilitate assembly procedures.

In such a combination of an elastomeric tear drop shaped sealing bulb moulded in place within a metal (or suitable plastics) retainer of annular configuration, the retainer serves as a load bearing structure so that the fastener may be torqued against a rigid member to provide a long term connection. The projecting portion of the sealing bulb interposed between adjacent recessed portions can provide a controlled deflection or squeeze of the elastomeric material, typically, of about 25% which is considered near optimum static sealing practice. Providing the tip of the sealing bulb to converge to a smooth, convex edge of relatively large radius, with the diameter of the opening at the tip edge being slightly smaller than the diameter of the fastener shank to provide an interference fit, can permit the seal assembly to be preassembled on the fastener and retained there for assembly in a threaded opening. Further, the seal assembly can be self-centering to locate the projecting portion of the sealing bulb at a position accommodate the variations of size of the opening to be sealed. The tear drop shape can be effective to place the projecting portion of the seal at a relatively large spacing from the shank of the fastener as well as to provide the centering function. Since deflection of the seal is limited by the rigid retainer, the elastomeric sealing bulb can retain its resilience and sealing characteristics for a long period of time.

The invention is diagrammatically illustrated by way of example with reference to the accompanying drawing, in which:

Figure 1 is a plan view of one embodiment of a seal assembly according to the invention;

Figure 2 is a sectional view of the seal assembly of Figure 1;

Figure 3 is an enlarged partial sectional view of the seal assembly of Figure 1;

Figure 4 is a sectional view of the seal assembly of Figure 1 shown preassembled to a fastener, partially threaded at a joint to be sealed;

Figure 5 is an enlarged partial sectional view of the fastener and seal assembly of Figure 4 after the fastener has been fully threaded to make a sealed joint; and

Figure 6 is an enlarged partial sectional view of an alternative embodiment of seal assembly of the invention.

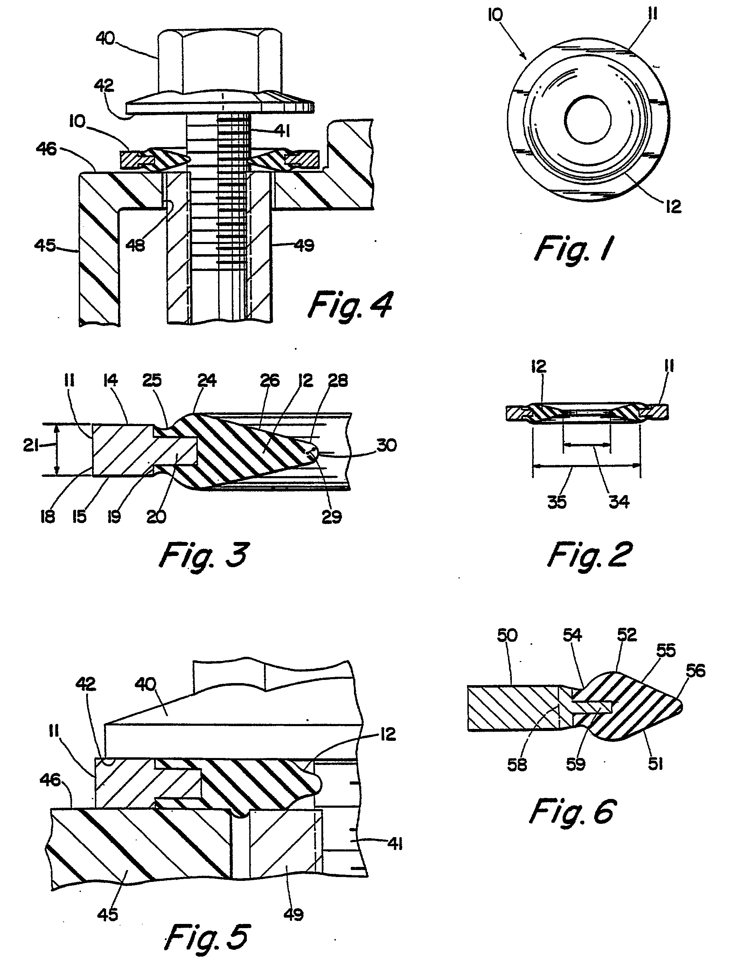

Referring to the drawing, a seal assembly 10 is shown in plan and cross sectional views in Figures 1 and 2. The seal assembly 10 comprises a rigid retainer 11 and an elastomeric sealing bulb 12, both being generally annular with the sealing bulb 12 secured within the retainer 11. As more apparent in the enlarged partial view of Figure 3, the retainer 11 is a ring having substantially flat and parallel upper and lower circular surfaces 14, 15, respectively and outer and inner peripheral cylindrical surfaces 18, 19.

A ring-like ledge 20 projects inwardly of the inner cylindrical surface 19, being stepped inwardly of the upper and lower surfaces 14, 15 to provide one form of interlocking support for the sealing bulb 12. The upper and lower surfaces 14, 15 are spaced by a dimension indicated by arrow 21, defining the thickness of the retainer 11.

The sealing bulb 12 is also best seen in the enlarged partial sectional view of Figure 3 as comprising an integral ring of elastomeric material secured at the ledge 20 and the inner peripheral surface 19 of the retainer 11 and having a projecting portion 24, adjacent outer and inner set back portions 25, 26, respectively, and a tip portion 28 inwardly of the inner set back portion 26. The sealing bulb 12 is preferably symmetrical so that a further projecting portion 24 and adjacent set back portions 25, 26 are provided at an opposite face of the sealing bulb 12 to said one face. The sealing bulb 12 is generally of tear drop shape as seen in section in Figure 3 with the projecting portion 24, the adjacent set back portions 25, 26 and the tip portion 28 blended into one another to form a continuous, smooth surface. The thickness of the sealing bulb at the projecting portion 24 is greater than the dimension 21 of the retainer 11 such that the sealing bulb projects axially beyond the upper and lower surfaces 14, 15 of the retainer 11. The outer set back portion 25 is such that region the sealing bulb faces are recessed below the upper and lower surfaces 14, 15 of the retainer 11. Preferably, the faces in the outer recessed portion 25 are of concave curvature, blended into the faces of the convexly curved projecting portion 24, in turn blended into the faces of the adjacent inner set back portion 26. The faces of the inner set back portion 26 comprise a pair of conical surfaces which taper linearly inwardly, converging into the tip portion 28 which is smoothly rounded into a convex curve of a radius as depicted by arrow 29 and forming an inner tip edge 30. The radius 29 is preferably less than half the dimension 21 between the upper and lower surfaces 14, 15 of the retainer 11 and forms an inner tip edge 30 diameter indicated by arrow 34 in Figure 2, which is also preferably less than one-half the diameter, indicated by arrow 35 at the projecting portion 24, as measured at its peak. By such dimensioning it will be seen that the projecting portion 24 and the retainer 11 are positioned a considerable distance from the tip portion 28 which arrangement can be utilized advantageously to place the projecting portion 24 outside a range of the tolerance of an opening to be sealed.

The configuration of the projecting portion 24 of the sealing bulb 12 and the adjacent set back portions 25, 26 is a sealing configuration which is generally well known in the art. In such an arrangement, the amount of elastomeric material in the projecting portion 24 is arranged to be slightly less than or equal to the void volumes formed by the adjacent set back portions 25, 26 and the adjacent structure to be sealed, so that the voids are substantially filled when the sealing bulb 12 is deflected or deformed under pressure. Preferably, such deformation of the cross section of the sealing bulb 12 is limited to about 25% to provide an optimum sealing arrangement which will retain its sealing characteristics over a long interval of time. Such deformation of the elastomeric sealing bulb 12 is limited by the rigid retainer structure 11 where the sealing assembly 10 is placed between sealing surfaces.

One example of this arrangement is depicted in Figures 4 and 5 wherein the seal assembly 10 is shown positioned on a fastener 40 respectively, in preassembled and assembled conditions. The fastener 40 may be a conventional bolt having a threaded shank 41 and a cap with a flat, annular sealing surface 42. The object to be sealed is, for example, a housing 45, having a flat sealing surface 46 with an opening 48 therein. A threaded stud 49 is depicted rigidly mounted within the housing 45 to receive the fastener 40 and to draw the cap sealing surface 42 into close proximity with the housing sealing surface 46.

The seal assembly 10 is shown preassembled on the fastener 40 in Figure 4 with the upper and lower surfaces 14, 15 interposed between the cap sealing surface 42 and the housing surface 46. The seal assembly 10 is fully supported on the fastener 40 solely by the tip portion 28 in engagement with the shank 41. The diameter 34 of the tip edge 30 is smaller than the diameter of the shank 41, providing an interference fit while the radius 29 of the tip portion 28 is sufficiently large to avoid substantial penetration of the tip portion 28 between the threads of the fastener 40 which might affect the positioning of the seal assembly 10. As noted, the seal assembly is then positioned with the projecting portion 24 outwardly of the opening 48 in the housing 45 and beyond any combination of the range of misalignment of the stud 49 with respect to the opening 48, the tolerance of the opening 48 itself, and the tolerance of the shank 41 of the fastener 40.

In the enlarged view of Figure 5, the fastener 40 is shown fully threaded into the stud 49 so that the cap sealing surface 42, the retainer 11 and the housing sealing surface 46 are in firm contact, limiting further engagement of the fastener 40 into the stud 49. The fastener 40 may be torqued to any desired level and it will be noted that the retainer 11 prevents any further distortion of the seal assembly 10 beyond that depicted, resulting in a known, controlled distortion thereof, well within its range of sealing capabilities. The sealing bulb 12 is distorted in Figure 5 into engagement with and between the cap sealing surface 42 and the housing sealing surface 46 as well as the upper portion of the stud 49 to provide an enhanced seal. The projecting portion 24 has been deformed into the adjacent set back portions 25, 26 substantially completely filling the voids thereby and creating an expansive sealing area of predeterminable characteristics.

In the embodiment of Figure 6, a circular retainer 50 and a sealing bulb 51 of tear drop shape are shown. The sealing bulb 51 includes a projecting portion 52 and adjacent outer and inner set back portions 54, 55, being similarly smoothly contoured and culminating in a tip portion 56, but in this instance, the faces of the inner set back portion 55 converge at a sharper angle. This results in the positioning of the tip portion 56 closer to the projecting portion 52 and modification of the radially extended tear drop shape to a more compact form, however, the same attributes of this embodiment result as described with respect to that shown in Figures 1–5. Dashed line 58 indicates that the inner periphery of the retainer 11 may be formed as an alternate series of axially extending ribs and grooves to enhance the bond between the sealing bulb 51 and the retainer 50 while still retaining a radially projecting ledge 59.

In both embodiments of the invention, the sealing bulb 12, 51 is preferably moulded in place to the respective retainer 11, 50, however, these elements may be formed separately and bonded together by adhesives or by other manufacturing techniques. Preferably, the retainers 11, 50 are metal, however, rigid plastics would serve as well in many instances. The sealing bulbs 12, 51 may be natural rubber or any one of many different forms of synthetic elastomers, such as nitrile, which are well known as sealing materials for devices of this kind.

## Claims

1. A self-centering seal assembly for a fastener, comprising an annular retainer (11, 50) having generally parallel upper and lower surfaces (14, 15) and a central opening therein, and an annular elastomeric seal means (12, 51) disposed in the central opening of the retainer (11, 50) and secured thereto, the seal means (12, 51) being of tear drop shape in cross section and comprising a projecting seal portion (24, 52), adjacent inner and outer set back seal portions (25, 54, 26, 55) and an inner circular tip portion (28, 56), the projecting seal portion (24, 52) extending axially outwardly of the retainer (11, 50) beyond the upper and lower surfaces (14, 15) thereof, the inner and outer set back seal portions (25, 54, 26, 55) being set back axially from the upper and lower surfaces (14, 15) of the retainer, the tip portion (28, 56) extending radially inwardly of the inner set back seal portion (26, 55) and terminating in a smoothly rounded edge (30) of convex curvature, the diameter of the tip portion (28, 56) at the edge being less than the diameter of a shank of the fastener with which the seal assembly is to be used, thereby to provide an interference fit thereon for support of the entire seal assembly, the radius of curvature of the edge (30) being less than one-half the dimension between the upper and lower surfaces (14, 15) of the retainer (11, 50) and the inner set back seal portion (26, 55) comprising a pair of conical surfaces which taper linearly inwardly converging into the tip portion (28, 56) to position the projecting seal portion (24, 52) relative to the shank of the fastener and outside a range of tolerance of an opening in which the fastener is to be disposed.

2. A seal assembly according to claim 1, wherein the retainer is a rigid member for load-bearing placement between a surface (46) defining an opening (48) in a device (45) to be sealed and a conforming sealing surface (42) of a fastener (40).

3. A seal assembly according to claim 2, wherein the diameter of the projecting portion (24) of the seal means (12), is greater than the diameter of the opening (48) in the device (45) to be sealed for any range of tolerance in the size of the opening (48).

4. A seal assembly according to any one of claims 1 to 3, wherein the retainer (11) further comprises an inner annular ledge (20, 59) in the retainer opening, the ledge extending beneath the outer set back portion (25, 54) and the projecting portion (24, 52) of the seal means (11).

5. A seal assembly according to any one of claims 1 to 4, wherein the retainer (11, 50) is metal and the seal means (12, 51) is bonded to the retainer (11, 50).

6. A seal assembly according to any one of claims 1 to 4, wherein the seal means (12, 51) is moulded in place to the retainer (11, 50).

## Patentansprüche

1. Eine selbstzentrierende Dichtungseinrichtung für ein Befestigungsmittel, enthaltend:
eine ringförmige Haltevorrichtung (11, 50) mit im allgemeinen parallel verlaufenden oberen und unteren Flächen (14, 15) und einer darin angebrachten zentralen Öffnung und ein ringförmiges Elastomer-Dichtelement (12, 51), welches in der zentralen Öffnung der Haltevorrichtung (11, 50) angeordnet und daran befestigt ist, wobei das Dichtelement (12, 51) einen tränenförmigen Querschnitt aufweist und einen vorspringenden Dichtungsteil (24, 52) enthält, der an innere und äußere rückspringende Dichtungsteile (25, 54, 26, 55) und einen inneren kreisförmigen Spitzenteil (28, 56) angrenzt, während sich der vorspringende Dichtungsteil (24, 52) im Verhältnis zur Haltevorrichtung (11, 50) axial nach außen über deren obere und untere Flächen (14, 15) hinaus erstreckt, wobei die inneren und äußeren rückspringenden Dichtungsteile (25, 54, 26, 55) im Verhältnis zur oberen und unteren Fläche (14, 15) der Haltevorrichtung axial zurückspringen und sich der Spitzenteil (28, 56) im Verhältnis zum inneren rückspringenden Dichtungsteil (26, 55) radial nach innen erstreckt und in eine glatt abgerundete Kante (30) konvexer Krümmung ausmündet, wobei der Durchmesser des Spitzenteils (28, 56) an der Kante kleiner ist als der Durchmesser eines Schafts des Befestigungsmittels, womit die Dichtungseinrichtung zum Einsatz kommen soll, so daß darauf zur Abstützung der gesamten Dichtungseinrichtung eine Preßpassung entsteht, während der Krümmungshalbmesser der Kante (30) weniger als die Hälfte der Abmessung zwischen den oberen und unteren Flächen (14, 15) der Haltevorrichtung (11, 50) beträgt und der innere rückspringende Dichtungsteil (26, 55) ein Paar konischer Flächen aufweist, die linear nach innen konisch zum Spitzenteil (28, 56) zusammenlaufen, um den vorspringenden Dichtungsteil (24, 52) im Verhältnis zum Schaft des Befestigungsmittels und außerhalb eines Toleranzbereichs einer Öffnung zu positionieren, worin das Befestigungsmittel angeordnet werden soll.

2. Eine Dichtungseinrichtung nach Anspruch 1, wobei die Haltevorrichtung ein starres Element für die tragende Anordnung zwischen einer Fläche (46), die eine Öffnung (48) in einer abzudichtenden Vorrichtung (45) begrenzt, und einer dazu passenden Dichtfläche (42) eines Befestigungsmittels (40) ist.

3. Eine Dichtungseinrichtung nach Anspruch 2, wobei der Durchmesser des vorspringenden Teils (24) des Dichtelements (12) bei jedem beliebigen Toleranzbereich in der Größe der Öffnung (48) größer ist als der Durchmesser der Öffnung (48) in der abzudichtenden Vorrichtung (45).

4. Eine Dichtungseinrichtung nach einem der Ansprüche 1 bis 3, wobei die Haltevorrichtung (11) weiterhin eine innere ringförmige Leiste (20, 59) in der Öffnung der Haltevorrichtung aufweist und sich die Leiste unterhalb des äußeren rückspringenden Teils (25, 54) und des vorspringenden Teils (24, 52) des Dichtelements (11) erstreckt.

5. Eine Dichtungseinrichtung nach einem der Ansprüche 1 bis 4, wobei die Haltevorrichtung (11, 50) aus Metall besteht und das Dichtelement (12, 51) mit der Haltevorrichtung (11, 50) verklebt ist.

6. Eine Dichtungseinrichtung nach einem der Ansprüche 1 bis 4, wobei das Dichtelement (12, 51) im Verhältnis zur Haltevorrichtung (11, 50) an seinem Platz ausgeformt ist.

**Revendications**

1. Dispositif de joint d'étanchéité autocentreur pour une fixation, comprenant un élément de retenue annulaire (11, 50) comportant des surfaces supérieure et inférieure généralement parallèles (14, 15) et une ouverture centrale percée dans celui-ci, et un dispositif d'étanchéité annulaire en élastomère (12, 51) placé dans l'ouverture centrale de l'élément de retenue (11, 50) et fixé à celui-ci, le dispositif d'étanchéité (12, 51) présentant une section transversale en forme de goutte ou de larme et comprenant une partie de joint d'étanchéité en saillie (24, 52) adjacente à des parties de joint d'étanchéité de recul intérieure et extérieure (25, 54, 26, 55) et une partie de pointe circulaire intérieure (28, 56) la partie de joint d'étanchéité en saillie (24, 52) étant dirigée axialement vers l'extérieur de l'élément de retenue (11, 50) au-delà des surfaces supérieure et inférieure (14, 15) de celui-ci, les parties de joint d'étanchéité de recul intérieure et extérieure (25, 54, 26, 55) étant axialement en recul par rapport aux surfaces supérieure et inférieure (14, 15) de l'élément de retenue, la partie de pointe (28, 56) étant dirigée radialement vers l'intérieur de la partie d'étanchéité de recul intérieur (26, 55) et se terminant par un bord arrondi lisse (30) à courbure convexe, le diamètre de la partie de pointe (28, 56) à l'endroit du bord étant inférieur au diamètre d'une tige de la fixation avec laquelle le dispositif de joint d'étanchéité doit être utilisé, ce qui permet ainsi de former un emboîtement d'enclenchement sur celle-ci pour supporter l'ensemble du dispositif de joint d'étanchéité, le rayon de courbure du bord (30) étant inférieur à la moitié de la distance entre les surfaces supérieure et inférieure (14, 15) de l'élément de retenue (11, 50) et la partie de joint d'étanchéité de recul intérieure (26, 55) comprenant une paire de surfaces coniques s'amincissant linéairement vers l'intérieur pour converger dans la partie de pointe (28, 56) de manière à mettre en place la partie de joint d'étanchéité en saillie (24, 52) par rapport à la tige de la fixation et à l'extérieur d'une plage de tolérances d'une ouverture dans laquelle la fixation doit être placée.

2. Dispositif de joint d'étanchéité selon la revendication 1, caractérisé en ce que l'élément de retenue est un élément rigide destiné à servir de support de charge entre une surface (46) définissant une ouverture (48) dans un dispositif (45) à sceller et une surface d'étanchéité correspondante (42) d'une fixation (40).

3. Dispositif de joint d'étanchéité selon la revendication 2, caractérisé en ce que le diamètre de la partie en saillie (24) du dispositif d'étanchéité (12), est supérieur au diamètre de l'ouverture (48) du dispositif (45) à sceller pour toute plage de tolérances dans la taille de l'ouverture (48).

4. Dispositif de joint d'étanchéité selon l'une quelconque des revendications 1 à 3, caractérisé en ce que l'élément de retenue (11) comprend en outre un rebord annulaire intérieur (20, 59) dans l'ouverture de l'élément de retenue, ce rebord s'étendant au-delà de la partie de recul extérieure (25, 54) et de la partie en saillie (24, 52) du dispositif d'étanchéité (11).

5. Dispositif de joint d'étanchéité selon l'une quelconque des revendications 1 à 4, caractérisé en ce que l'élément de retenue (11, 50) est métallique et en ce que le dispositif d'étanchéité (12, 51) est collé à l'élément de retenue (11, 50).

6. Dispositif de joint d'étanchéité selon l'une quelconque des revendications 1 à 4, caractérisé en ce ce que le dispositif d'étanchéité (12, 51) est moulé en place sur l'élément de retenue (11, 50).

Fig. 1

Fig. 2

Fig. 3

Fig. 4

Fig. 5

Fig. 6